(19) Europäisches Patentamt
European Patent Office
Office européen des brevets

(11) **EP 4 517 666 A1**

(12) **EUROPEAN PATENT APPLICATION**

(43) Date of publication:
**05.03.2025 Bulletin 2025/10**

(21) Application number: **23194670.8**

(22) Date of filing: **31.08.2023**

(51) International Patent Classification (IPC):
*G06T 7/73* (2017.01)

(52) Cooperative Patent Classification (CPC):
**G06T 7/74;** G06T 2207/10028; G06T 2207/20081;
G06T 2207/20084; G06T 2207/30204

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Aktiengesellschaft
80333 München (DE)**

(72) Inventors:
• **Misik, Adam
  80797 München (DE)**
• **Brock, Heike
  80799 München (DE)**
• **Hasler, Oliver
  6300 Zug (CH)**

(74) Representative: **Siemens Patent Attorneys
Postfach 22 16 34
80506 München (DE)**

(54) **A METHOD FOR DETERMINING A CURRENT POSITION OF AN AUGMENTED REALITY DEVICE IN SURROUNDINGS OF THE AUGMENTED REALITY DEVICE BY THE AUGMENTED REALITY DEVICE, COMPUTER PROGRAM PRODUCT, COMPUTER-READABLE STORAGE MEDIUM, AS WELL AS AN AUGMENTED REALITY DEVICE**

(57) The invention relates to a method for determining a current position (P1) of an augmented reality device (10) in surroundings (12) of the augmented reality device (10) by the augmented reality device (10), comprising the steps of: capturing a surround view image (30) of the surroundings (12) with a depth information (r) of the surroundings (12) by an optical detection device (16); determining at least one predefined visual marker (28) in the captured surround view image (30) by an electronic computing device (18) of the augmented reality device (10); determining a two dimensional position (P2) of the visual marker (28) relative to the augmented reality device (12) by the electronic computing device (18); determining a depth information (r) of the at least one determined visual marker (28) by the electronic computing device (18); determining a three dimensional position of the visual marker (28) from the two dimensional position (P2) and the depth information (r) of the visual marker (28); and determining the current position (P1) of the augmented reality device (12) depending on the determined three dimensional position (P2) of the visual marker (28) and the depth information (r) of the visual marker (28) by the electronic computing device (18). Furthermore, the invention relates to a computer program product, a computer-readable storage medium, as well as to an augmented reality device (10).

FIG 1

**Description**

The present invention relates to a method for determining a current position of an augmented reality device in surroundings of the augmented reality device by the augmented reality device according to the pending claim 1. Furthermore, the present invention relates to a computer program product, a computer-readable storage medium as well as to an augmented reality device.

Augmented reality (AR) applications that use local environmental information require an accurate location of the augmented reality device within the target environment. This is particularly important for augmented reality applications that relate to physical information present in the real world for virtual spatial representations, for example, wide-area digital twins (DT) of buildings or factories.

Two main approaches are distinguished for augmented reality device localization. These approaches are the alignment based on markers and markerless alignment. Markerless alignment methods, such as SLAM (simultaneous localization and mapping), rely on continuous data input to estimate the current position of an augmented reality device within the environment. Marker-based alignment methods commonly require the definition of suitable visual markers and their positioning within the environment before system set-up.

Common visual marker detection methods rely on single RGBD images in non-panoramic format to make assumptions about the three-dimensional position of the markers.

It is an object of the present invention to provide a method, a computer program product, a computer-readable storage medium, as well as an augmented reality device, by which an improved determining of a current position of an augmented reality device in surroundings of the augmented reality device can be realized.

This object is solved by a method, a corresponding computer program product, a corresponding computer-readable storage medium, as well as to a corresponding augmented reality device according to the independent claims. Advantageous embodiments are presented in the dependent claims.

One aspect of the invention relates to a method for determining a current position of an augmented reality device in surroundings of the augmented reality device by the augmented reality device. A surround view image of the surroundings with a depth information of the surroundings is captured by an optical detection device, for example of the augmented reality device or another device capable of capturing surround view images. At least one predefined visual marker in the captured surround view image is determined by an electronic computing device of the augmented reality device. A two dimensional (2D) position of the visual marker in the surround view image relative to the augmented reality device by the electronic computing device is determined. A depth information of the at least one determined visual marker is determined by the electronic computing device. A three dimensional (3D) position of the visual marker is determined using the two dimensional position and the depth information. A current position of the augmented reality device is determined depending on the determined three dimensional position of the visual marker and the depth information of the visual marker by the electronic computing device.

Therefore, a method is proposed for the determination of the three-dimensional position of visual markers that is independent of initial annotations and location specifications.

The method is solely making use of already existing data collected during the digitalization of a location. In particular, the invention is to detect visual markers in the surround view image (panoramic images) of a location scan, and subsequently estimate their position in the three-dimensional space. The three-dimensional position can then be used as anchors to align the physical and digital representation for the given scene. Once a visual marker with a known three-dimensional position is detected in two-dimensional image captured by the augmented reality device, the position of the augmented reality device can be determined based on the three-dimensional position of the visual marker and the perspective-n-point algorithm. The whole method is in particular based on machine learning methods and coordinate transformations and is hence fully autonomized.

Therefore, the proposed invention differs from the state of the art that, for example, current methods for estimating the position of the visual marker cannot be easily automated or require manual effort. The present invention enables the estimation of the three-dimensional position of markers solely by using existing image data acquired during the scanning of a digital twin side. Furthermore, current methods are based on data in a standard image format, while the invention uses for example a 360-degree panoramic image or also non-360° images stitched together to create a 360° image or other panoramic images for example with a 180° view, in particular the surround view image. So far, there are no method for visual marker position estimation from panoramic images known.

Furthermore, a major advantage of the proposed invention is the wide range of marker types for which the position can be estimated. The selection of a particular object of its occurrence in the given environment. Once the object detection algorithm is tuned to detect the selected marker type, the position of the visual marker can be efficiently estimated using the method.

According to an embodiment, the at least one visual marker is determined by using an object detection algorithm. In particular, the object detection algorithm is a so-called machine learning based algorithm. In particular, the electronic computing device therefore comprises a pretrained neural network for the object detection, such as YOLOv5. Therefore, an efficient way for determining the visual marker is provided.

In another embodiment, the surround view image is split into a plurality of square blocks. In particular, the surround view image, in particular the components of the surround view image, is split into N square blocks. The splitting enables the use of the pre-trained neural networks for the object detection.

In another embodiment, 2D coordinates of the position of the visual marker in the surround view image are transformed into polar coordinates. In particular, the coordinates of the image plane position (x, y) of the visual marker estimated by the object detection are converted into polar coordinates. For panoramic image with 360-degree view around the longitudinal and 180-degree view around the lateral axis, the following formulas are used:

$$a = -\pi + 2\pi \frac{y}{w};$$

$$b = -\frac{1}{2}\pi + \pi \frac{x}{h};$$

Here, a denotes the longitudinal angle, b the latitude angle, w the image width and h the image height. Both angles are expressed in radians. For different viewpoint specifications of the panoramic image, above formulas might be needed to be altered appropriately.

In another embodiment, the polar coordinates are transformed into spherical coordinates. In particular, the derived a and b are used together with the depth r obtained from the visual marker position (x, y) in the depth panorama to express the marker's three-dimensional position in three coordinates ($x_s$, $y_s$, $z_s$) relative to the origin of the respective coordinate system, which is aligned with the center pixel of the panoramic image:

$$x_s = r * \cos(a) * \cos(b);$$

$$y_s = r * \sin(a) * \cos(b);$$

$$z_s = r * \sin(b);$$

In another embodiment, the spherical coordinates are transformed into world coordinates. In particular, from the spherical coordinates' representation, the world coordinate position pm, w = ($x_w$, $y_w$, $z_w$) is derived of the marker using the camera extrinsic. First, the marker position is rotated in spherical coordinates $p_{m, s}$ = ($x_s$, $y_s$, $z_s$), by the camera's jaw angle y obtained from the camera intrinsic. This step aligns the marker position to the camera orientation. For this purpose, a rotation matrix $R_y$ is defined as:

$$R_y = \begin{bmatrix} \cos(y) & -\sin(y) & 0 \\ \sin(y) & \cos(y) & 0 \\ 0 & 0 & 1 \end{bmatrix}$$

Then $p_{m, s}$ is rotated as

$$\hat{p}_{m,s} = R_y p_{m,s};$$

Finally, the 3D world coordinate position $p_{m, w}$ is obtained of the marker that serves the anchor for alignment and self-localization of the augmented reality device by subtracting the rotating marker position $p_{m, s}$ from the camera's original position $p_{c, 0}$:

$$p_{m,w} = p_{c,0} - \hat{p}_{m,s};$$

In another embodiment, a black and white image of the surroundings is captured by the capturing device. In particular, the surroundings are captured in a black and white format. Therefore, an easy way for detecting/determining the position of the augmented reality device can be realized.

In another embodiment, an RGB image of the surroundings is captured. In particular, a red-green-blue image (RGB) is captured. Therefore, the surroundings can be captured in a detailed manner, and therefore determining the visual marker is performed in an improved manner.

In another embodiment, at least one extrinsic parameter of the optical detection device is considered by determining the current position of the augmented reality device. In particular, from the spherical coordinates' representation, the world coordinate position pm, w = ($x_w$, $y_w$, $z_w$) is derived of the marker using the camera extrinsic. First, the marker position is rotated in spherical coordinates $p_{m, s}$ = ($x_s$, $y_s$, $z_s$), by the camera's jaw angle y obtained from the camera intrinsic. This step aligns the marker position to the camera orientation.

In another embodiment, at least one predefined label is determined as the visual marker. For example, a QR or other bar codes can be used for determining the current position.

In another embodiment, at least one predefined object in the surroundings is determined as the visual marker. For example, office objects or fire extinguishers, which were learned during generating the digital twin for the surroundings can be used. In particular, it is important that the detailed position of the predefined object is known in the digital twin. Therefore, different objects can be used as an anchor in order to determine the current position of the augmented reality device.

In another embodiment, the at least one visual marker is determined by using a bounding box algorithm. In particular, the splitting of the panoramic image into square blocks can be used to use pre-trained neural networks for object detection. The object detection outputs may be rectangular bounding boxes, estimating the position of the visual marker in the surroundings. Then, block images can be reconstructed to the original panoramic image and can be converted to the block image coordinates of the bounding box to the panoramic image coordinates. In particular, the center of the bounding box can be used as the coordinates of the x and y coordinates of the visual marker on the image plane, whereas here x refers to the horizontal and y to the vertical axis. All coordinate references given in the following could be interchanged according using standard coordinate definitions to account when needed. Then, the bounding box may be inserted into the corresponding depth panorama to derive the visual marker depth r. Since the depth panorama has the same dimension as the surround view image, no rescaling of the bounding box coordinates is needed. Similarly, as for the x and y coordinates, r can be obtained by using depth value at the center of the bounding box.

In particular, the method is a computer-implemented method. Therefore, another aspect of the invention relates to a computer program product comprising program code means for performing a method according to the preceding aspect.

Furthermore, the invention relates to a computer-readable storage medium comprising at least the computer program product according to the preceding aspect.

A still further aspect of the invention relates to an augmented reality device for at least determining a current position of an augmented reality device in surroundings of the augmented reality device, comprising at least one optical capturing device and one electronic computing device, wherein the augmented reality device is configured for performing a method according to the preceding aspect. In particular, the method is performed by the augmented reality device.

Furthermore the augmented reality device may be configured for presenting an augmented reality for person, in particular for a person who is wearing the augmented reality device.

Advantageous embodiments of the method are to be regarded as advantageous embodiments of the computer program product, the computer-readable storage medium as well as the augmented reality device. Therefore, the augmented reality device comprises means for performing the method according to the preceding aspect.

A landmark/visual marker can be understood as features and/or patterns in an environment that can be identified and to which at least location information or position information can be assigned. These can be, for example, characteristic points or objects that are arranged at specific positions in the environment.

An artificial neural network can be understood as a software code or a compilation of several software code components, wherein the software code may comprise several software modules for different functions, for example one or more encoder modules and one or more decoder modules.

An artificial neural network can be understood as a nonlinear model or algorithm that maps an input to an output, wherein the input is given by an input feature vector or an input sequence and the output may be an output category for a classification task or a predicted sequence.

For example, the artificial neural network may be provided in a computer-readable way, for example, stored on a storage medium of the vehicle, in particular of the at least one computing unit.

The neural network comprises several modules including the encoder module and the at least one decoder module. These modules may be understood as software modules or respective parts of the neural network. A software module may be understood as software code functionally connected and combined to a unit. A software module may comprise or implement several processing steps and/or data structures.

The modules may, in particular, represent neural networks or sub-networks themselves. If not stated otherwise, a module of the neural network may be understood as a trainable and, in particular, trained module of the neural network. For example, the neural network and thus all of its trainable modules may be trained in an end-to-end fashion before the method is carried out. However, in other implementations, different modules may be trained or pre-trained individually. In other words, the method according to the invention corresponds to a deployment phase of the neural network.

In the context of the present disclosure, an object detection algorithm may be understood as a computer algorithm, which is able to identify and localize one or more objects within a provided input dataset, for example input image, by specifying respective bounding boxes or regions of interest, ROI, and, in particular, assigning a respective object class to each of the bounding boxes, wherein the object classes may be selected from a predefined set of object classes. Therein, assigning an object class to a bounding box may be understood such that a corresponding confidence value or probability for the object identified within the bounding box being of the corresponding object class is provided. For example, the algorithm may provide such a confidence value or probability for each of the object classes for a given bounding box. Assigning the object class may for example include selecting or providing the object class with the largest confidence value or probability. Alternatively, the algorithm can specify only the bounding boxes without assigning a corresponding object class.

A computing unit/electronic computing device may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

Computer vision algorithms, which may also be denoted as machine vision algorithms or algorithms for automatic visual perception, may be considered as computer algorithms for performing a visual perception task automatically. A visual perception task, also denoted as computer vision task, may for example be understood as a task for extracting visual information from image data. In particular, the visual perception task may in several cases be performed by a human in principle, who is able to visually perceive an image corresponding to the image data. In the present context, however, visual perception tasks are performed automatically without requiring the support by a human.

For example, a computer vision algorithm may be understood as an image processing algorithm or an algorithm for image analysis, which is trained using machine learning and may for example be based on an artificial neural network, in particular a convolutional neural network.

For example, the computer vision algorithm may include an object detection algorithm, an obstacle detection algorithm, an object tracking algorithm, a classification algorithm, a segmentation algorithm, and/or a depth estimation algorithm.

Corresponding algorithms may analogously be performed based on input data other than images visually perceivable by a human. For example, point clouds or images of infrared cameras et cetera may also be analyzed by means of correspondingly adapted computer algorithms. Strictly speaking, however, the corresponding algorithms are not visual perception algorithms since the corresponding sensors may operate in domains, which are not perceivable by the human eye, such as the infrared range. Therefore, here and in the following, such algorithms are denoted as perception or automatic perception algorithms. Perception algorithms therefore include visual perception algorithms, but are not restricted to them with respect to a human perception. Consequently, a perception algorithm according to this understanding may be considered as computer algorithm for performing a perception task automatically, for example, by using an algorithm for sensor data analysis or processing sensor data, which may, for example, be trained using machine learning and may, for example, base on an artificial neural network. Also the generalized perception algorithms may include object detection algorithms, object tracking algorithms, classification algorithms and/or segmentation algorithms, such as semantic segmentation algorithms.

In case an artificial neural network is used to implement a visual perception algorithm, a commonly used architecture is a convolutional neural network, CNN. In particular, a 2D-CNN may be applied to respective 2D-camera images. Also for other perception algorithms, CNNs may be used. For example, 3D-CNNs, 2D-CNNs or 1D-CNNs may be applied to point clouds depending on the spatial dimensions of the point cloud and the details of processing.

The output of a perception algorithm depends on the specific underlying perception task. For example, an output of an object detection algorithm may include one or more bounding boxes defining a spatial location and, optionally, orientation of one or more respective objects in the environment and/or corresponding object classes for the one or more objects. An output of a semantic segmentation algorithm applied to a camera image may include a pixel level class for each pixel of the camera image. Analogously, an output of a semantic segmentation algorithm applied to a point cloud may include a corresponding point level class for each of the points. The pixel level classes or point level classes may, for example, define a type of object the respective pixel or point belongs to.

For use cases or use situations which may arise in a method according to the invention and which are not explicitly described herein, it may be provided that, in accordance with the method, an error message and/or a prompt for user feedback is output and/or a default setting and/or a predetermined initial state is set.

Independent of the grammatical term usage, individuals with male, female or other gender identities are included within the term.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features, which go beyond or deviate from the combinations of features set forth in the recitations of the claims may be comprised by the invention.

Therefore, the figures show:

FIG 1    a schematic block diagram according to an embodiment of an augmented reality device in surroundings;

FIG 2    another schematic block diagram according to an embodiment of the method; and

FIG 3    another schematic block diagram according to an embodiment of the method.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

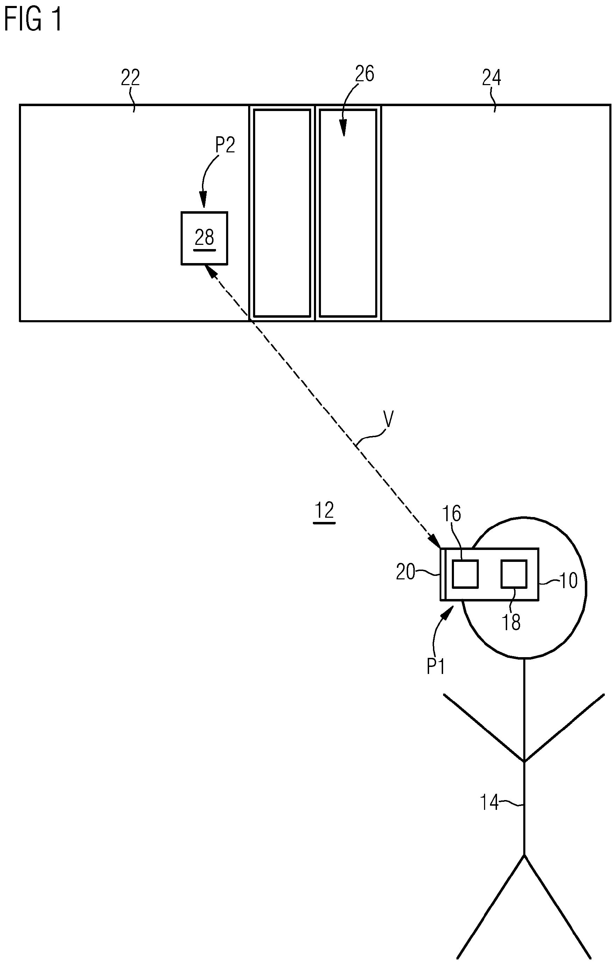

FIG 1 shows a schematic view according to an embodiment of an augmented reality device 10. The augmented reality device 10 is configured for at least determining a current position P1 of the augmented reality device 10 in surroundings 12 of the augmented reality device 10. Furthermore, the augmented reality device 10 may be configured for presenting an augmented reality for a person 14. The augmented reality device 10 therefore comprises at least one optical capturing device 16 as well as one electronic computing device 18. Furthermore, the augmented reality device 10 may comprise a display device 20, for example, for displaying the augmented reality for the person 14.

In particular, FIG 1 shows that in the surroundings 12 a first wall 22, a second wall 24 and doors 26 are shown. Furthermore, on the first wall 22 a visual marker 28, for example in the form of a label, is shown.

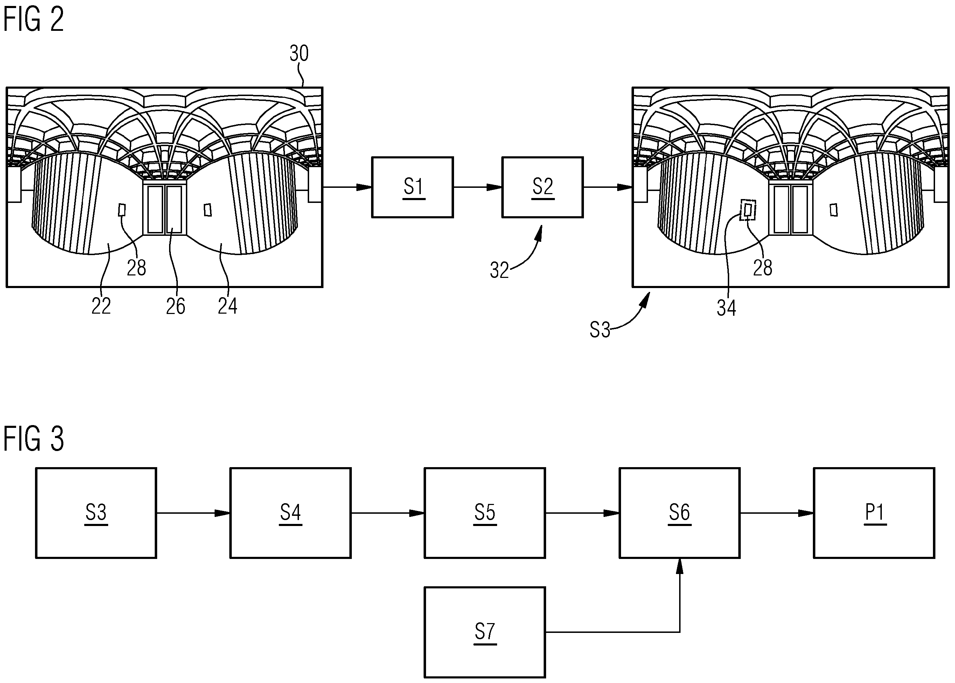

According to the shown embodiment of the augmented reality device 10, a method for determining the current position P1 of the augmented reality device 10 may be performed. In particular, a surround view image 30 (FIG 2) of the surroundings 12 with a depth information r of the surroundings 12 is captured by the optical detection device 16. At least one predefined visual marker 28 in the captured surround view image 30 is determined by the electronic computing device 18 of the augmented reality device 10. A position P2 of the visual marker 28 relative to the augmented reality device 10 is determined by the electronic computing device 18. A depth information r of the at least determined visual marker 28 is determined by the electronic computing device 18, and the current position P1 of the augmented reality device 10 is determined depending on the determined position P2 of the visual marker 28 and the depth information r of the visual marker 28 by the electronic computing device 18.

In particular, the at least one predefined visual marker 28 may be configured as a label and/or is configured as a predefined object in the surroundings 12. For example, predefined office objects or a fire extinguisher can be used as the visual marker 28.

FIG 2 shows a schematic flow chart according to an embodiment of the method, in particular according to the detection/determination of the visual marker 28. FIG 2 shows the surround view image 30 according to FIG 1. In a first step S1, a so-called block splitting is performed. In particular, the surround view image 30 can be given as a RGB (red green blue) panoramic image of the surroundings 12 with the specific visual marker 28, wherein a method to automatically estimated positions of the visual marker 28 is proposed.

First, the RGB components of the surround view image 30 is split into N square blocks. The splitting enables the use of pretrained neural networks for an object detection 32 which is performed in a second step. S2, the object detection 32 may be used in order to output a rectangular bounding box 34 of the visual marker 28, which is shown in a third step S3. In particular, the position of the visual marker 28 is determined by using the bounding box. In particular, the block images were reconstructed to the original panoramic image and may be converted to the block image coordinates of the bounding box 34 to the panoramic image coordinates. The center of the bounding box 34 may be used as the coordinates of the x and y coordinates of the visual marker 28 on the image plane, whereas here x refers to the horizontal and y to the vertical axis. All coordinate axes references given in the following could be interchanged accordingly using standard coordinate definitions to account when needed. Then, the bounding box 34 is inserted into the corresponding depth panorama to derive the marker depth, in particular the depth information r. Since the depth panorama has the same dimension as the RGB panorama, in particular the surround view image 30, no rescaling of the bounding box coordinates is needed. Similarly, as for the x and y coordinates, the depth information r is be obtained by using depth value at the center of the bounding box 34.

FIG 3 shows a schematic flow chart, in particular a schematic block diagram according to an embodiment of the method, in particular according to the position estimation. In particular, the shown embodiment starts with the third step S3, as shown in FIG 2. In particular, the bounding box 34 is generated in the third step S3. After the third step S3, a fourth step S4 is performed wherein in the fourth step S4 the coordinates of the position of the visual marker 28 in the surround view image 30 are transformed into polar coordinates. In a fifth step S5, the polar coordinates are transformed into spherical coordinates. In a sixth step S6, the spherical coordinates are transformed into world coordinates.

As an output of the world coordinates, the current position P1 is used as position of the augmented reality device 10 beforehand. Then the 3D position of the visual marker 28, which is then used to localize the augmented reality device 10 is used. Therefore, in a seventh step S7, camera intrinsic parameters may be used by determining the world coordinates position.

**Claims**

1. A method for determining a current position (P1) of an augmented reality device (10) in surroundings (12) of the augmented reality device (10) by the augmented reality device (10), comprising the steps of:

   - capturing a surround view image (30) of the surroundings (12) with a depth information (r) of the surroundings (12) by an optical detection device (16);
   - determining at least one predefined visual marker (28) in the captured surround view image (30) by an electronic computing device (18) of the augmented reality device (10);
   - determining a two dimensional position (P2) of the visual marker (28) relative to the augmented reality device (12) by the electronic computing device (18);
   - determining a depth information (r) of the at least one determined visual marker (28) by the electronic computing device (18);
   - determining a three dimensional position of the visual marker (28) from the two dimensional position (P2) and the depth information (r) of the visual marker (28); and
   - determining the current position (P1) of the augmented reality device (12) depending on the determined three dimensional position (P2) of the visual marker (28) and the depth information (r) of the visual marker (28) by the electronic computing device (18).

2. The method according to claim 1, **characterized in that** the at least one visual marker (28) is determined by using an object detection algorithm (32).

3. The method according to claim 1 to 2, **characterized in that** the surround view image (30) is split into a plurality of square blocks. (S1)

4. The method according to any of claims 1 to 3, **characterized in that** coordinates of the two dimensional position (P2) of the visual marker (28) in the surround view image (30) are transformed into polar coordinates. (S4)

5. The method according to claim 4, **characterized in that** the polar coordinates are transformed into spherical coordinates. (S5)

6. The method according to claim 5, **characterized in that** the spherical coordinates are transformed into three dimensional world coordinates. (S6)

7. The method according to any of claims 1 to 6, **characterized in that** a black and white image of the surroundings (12) is captured.

8. The method according to any of claims 1 to 6, **characterized in that** an RGB image of the surroundings (12) is captured.

9. The method according to any of claims 1 to 8, **characterized in that** at least one extrinsic parameter of the optical detection device (16) is considered by determining the current position (P1) of the augmented reality device (10). (S7)

10. The method according to any of claims 1 to 9, **characterized in that** at least one predefined label is determined as the visual marker (28).

11. The method according to any of claims 1 to 10, **characterized in that** at least one predefined object in the surroundings (12) is determined as the visual marker (28).

12. The method according to any of claims 1 to 11, **characterized in that** the at least one visual marker (28) is determined by using a bounding box algorithm. (S3)

13. A computer program product comprising program code means for performing a method according to any one of claims 1 to 12.

14. A computer-readable storage medium comprising at least the computer program product according to claim 13.

15. An augmented reality device (10) for at least determining a current position (P1) of an augmented reality device (10) in surroundings (12) of the augmented reality device (10), comprising at least one optical capturing device (16) and one electronic computing device (18), wherein the augmented reality device (10) is configured for performing a method according to any one of claims 1 to 12.

FIG 1

# FIG 2

30

22  28  26  24

→ S1 → S2 →

32

28

34

S3

# FIG 3

S3 → S4 → S5 → S6 → P1

S7 →

EP 4 517 666 A1

## EUROPEAN SEARCH REPORT

**Application Number**

EP 23 19 4670

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/005229 A1 (LEE SHIN-JUN [KR] ET AL) 7 January 2016 (2016-01-07) | 1-3,7-15 | INV. G06T7/73 |
| Y | * paragraph [0004] – paragraph [0006] * * paragraph [0123] – paragraph [0125]; figure 5A * * paragraph [0155] – paragraph [0156] * * paragraph [0161] * * paragraph [0177] – paragraph [0179] * * paragraph [0183] * * paragraph [0318] – paragraph [0328]; figures 17-20 * * paragraph [0535] – paragraph [0538]; figure 29 * * paragraph [0621] * | 4-6 | |
| X | HAJJAMI JAOUAD ET AL: "ArUcOmni: detection of highly reliable fiducial markers in panoramic images", 2020 IEEE/CVF CONFERENCE ON COMPUTER VISION AND PATTERN RECOGNITION WORKSHOPS (CVPRW), IEEE, 14 June 2020 (2020-06-14), pages 2693-2699, XP033798826, DOI: 10.1109/CVPRW50498.2020.00325 [retrieved on 2020-07-27] | 1-15 | **TECHNICAL FIELDS SEARCHED (IPC)** G06T |
| Y | * abstract * * Section 2 * * Section 2.2; figures 1,2 * | 4-6 | |

-/--

The present search report has been drawn up for all claims

| Place of search | Date of completion of the search | Examiner |
|---|---|---|
| Munich | 1 February 2024 | Salvador, Elena |

EPO FORM 1503 03.82 (P04C01)

## EUROPEAN SEARCH REPORT

Application Number

**EP 23 19 4670**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI BOXUAN ET AL: "Corner location and recognition of single ArUco marker under occlusion based on YOLO algorithm", JOURNAL OF ELECTRONIC IMAGING, S P I E – INTERNATIONAL SOCIETY FOR OPTICAL ENGINEERING, US, vol. 30, no. 3, 1 May 2021 (2021-05-01), page 33012, XP060143502, ISSN: 1017-9909, DOI: 10.1117/1.JEI.30.3.033012 [retrieved on 2021-05-25] * abstract; figure 6 * | 2,11,12 | |
| A | XIAO AORAN ET AL: "An Indoor Positioning System Based on Static Objects in Large Indoor Scenes by Using Smartphone Cameras", SENSORS, vol. 18, no. 7, 11 July 2018 (2018-07-11), page 2229, XP055821016, DOI: 10.3390/s18072229 Retrieved from the Internet: URL:https://www.researchgate.net/publicati on/326341918_An_Indoor_Positioning_System_ Based_on_Static_Objects_in_Large_Indoor_Sc enes_by_Using_Smartphone_Cameras/fulltext/ 5b46adff0f7e9b4637cdd48d/An-Indoor-Positio ning-System-Based-on-Static-Objects-in-Lar ge-Indoor-Scenes-by-Using-Smartphone-Camer as.pdf> * abstract; figures 1,2,3 * | 2,11,12 | TECHNICAL FIELDS SEARCHED (IPC) |

-/--

The present search report has been drawn up for all claims

| Place of search | Date of completion of the search | Examiner |
|---|---|---|
| Munich | 1 February 2024 | Salvador, Elena |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 23 19 4670

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | UJKANI ERIND ET AL: "Visual Marker Guided Point Cloud Registration in a Large Multi-Sensor Industrial Robot Cell", 2018 14TH IEEE/ASME INTERNATIONAL CONFERENCE ON MECHATRONIC AND EMBEDDED SYSTEMS AND APPLICATIONS (MESA), IEEE, 2 July 2018 (2018-07-02), pages 1-6, XP033395741, DOI: 10.1109/MESA.2018.8449195 [retrieved on 2018-08-27] * abstract * * Section I * * Section II; figures 3,4,7 * | 1-15 | |
| A | Côté Stéphane ET AL: "LIVE MOBILE PANORAMIC HIGH ACCURACY AUGMENTED REALITY FOR ENGINEERING AND CONSTRUCTION 1", , 30 October 2013 (2013-10-30), XP093125256, Retrieved from the Internet: URL:https://itc.scix.net/pdfs/convr-2013-27.pdf [retrieved on 2024-01-30] * the whole document * | 1-15 | |
| A | FENG WEIYU ET AL: "Digital Twin Tracking Dataset (DTTD): A New RGB+Depth 3D Dataset for Longer-Range Object Tracking Applications", 2023 IEEE/CVF CONFERENCE ON COMPUTER VISION AND PATTERN RECOGNITION WORKSHOPS (CVPRW), IEEE, 17 June 2023 (2023-06-17), pages 3289-3298, XP034397623, DOI: 10.1109/CVPRW59228.2023.00331 [retrieved on 2023-08-14] * the whole document * | 1-15 | |

**TECHNICAL FIELDS SEARCHED (IPC)**

The present search report has been drawn up for all claims

| Place of search | Date of completion of the search | Examiner |
|---|---|---|
| Munich | 1 February 2024 | Salvador, Elena |

EPO FORM 1503 03.82 (P04C01)

## ANNEX TO THE EUROPEAN SEARCH REPORT
## ON EUROPEAN PATENT APPLICATION NO.

**EP 23 19 4670**

This annex lists the patent family members relating to the patent documents cited in the above-mentioned European search report.
The members are as contained in the European Patent Office EDP file on
The European Patent Office is in no way liable for these particulars which are merely given for the purpose of information.

**01-02-2024**

| Patent document cited in search report | Publication date | Patent family member(s) | Publication date |
|---|---|---|---|
| US 2016005229 A1 | 07-01-2016 | NONE | |

EPO FORM P0459